# EUROPÄISCHE PATENTANMELDUNG

(11) **EP 2 843 497 A2**
(43) Veröffentlichungstag der Anmeldung: **04.03.2015**
(21) Anmeldenummer: 14164203.3
(22) Anmeldetag: 10.04.2014
(51) Int. Cl.: G05F 1/573, H05B 33/08, H05B 37/04

(54) **Schutzschaltung für LEDs**

(30) Priorität: 12.04.2013 DE 102013206541
(71) Anmelder: Zumtobel Lighting GmbH, 6850 Dornbirn (AT)
(72) Erfinder: Gajdos, David, 6850 Dornbirn (AT)
(74) Vertreter: Thun, Clemens

(57) **Zusammenfassung**

Die vorliegende Erfindung betrifft eine Schutzschaltung 41, 42, 43 und eine Schaltungsanordnung 10 mit wenigstens einer Schutzschaltung 41, 42, 43. Die Schutzschaltung 41, 42, 43 ist wenigstens einem LED-Strang 21, 22, 23 zugeschaltet und dazu geeignet, im Falle einer Unterbrechung des LED-Strangs 21, 22, 23 wenigstens einen Teil des für diesen LED-Strang 21, 22, 23 vorgesehenen Stroms aufzunehmen. Insbesondere wird der aufgenommene Teil des Stroms dabei über einen dem LED-Strang 21, 22, 23 parallelen Überbrückungspfad der Schutzschaltung 41, 42, 43 geleitet. Die LEDs der anderen LED-Stränge 21, 22, 23 können vor einer Stromerhöhung aufgrund der Unterbrechungen geschützt werden.

## Beschreibung

Die vorliegende Erfindung betrifft eine Schutzschaltung für LEDs. Die vorliegende Erfindung betrifft ferner eine Schaltungsordnung, die zum Schutz von LEDs ausgelegt ist und dazu die erfindungsgemäße Schutzschaltung umfasst.

Es ist aus dem Stand der Technik bekannt, mehrere LED-Stränge, in denen jeweils mehrere LEDs in Serie geschaltet sind, parallel zu einander in einer Schaltungsanordnung zu verschalten. Die Schaltungsanordnung der mehreren parallelen LED-Stränge wird üblicherweise von einer gemeinsamen Strom- oder Spannungsquelle mit Strom versorgt.

In einer solchen Schaltungsanordnung sind verschiedene Defekte oder Fehler möglich und bekannt. Zu einem kann in einem LED-Strang ein Kurzschluss auftreten. Der Kurzschluss führt zu einem starken Stromanstieg in dem LED-Strang, in dem der Kurzschluss auftritt. Zum anderen kann in einem LED-Strang eine Unterbrechung auftreten. Eine solche Unterbrechung führt dazu, dass weniger Strom oder sogar gar kein Strom mehr durch den LED-Strang fließen kann, in dem die Unterbrechung auftritt. Aufgrund der gemeinsamen Strom- oder Spannungsquelle führt die Unterbrechung dadurch aber zu einer Stromerhöhung in den anderen parallelen LED-Strängen. Des Weiteren sind auch Defekte in der Schaltungsanordnung möglich, bei denen beiden beschriebenen Fehler gleichzeitig in verschiedenen LED-Strängen auftreten.

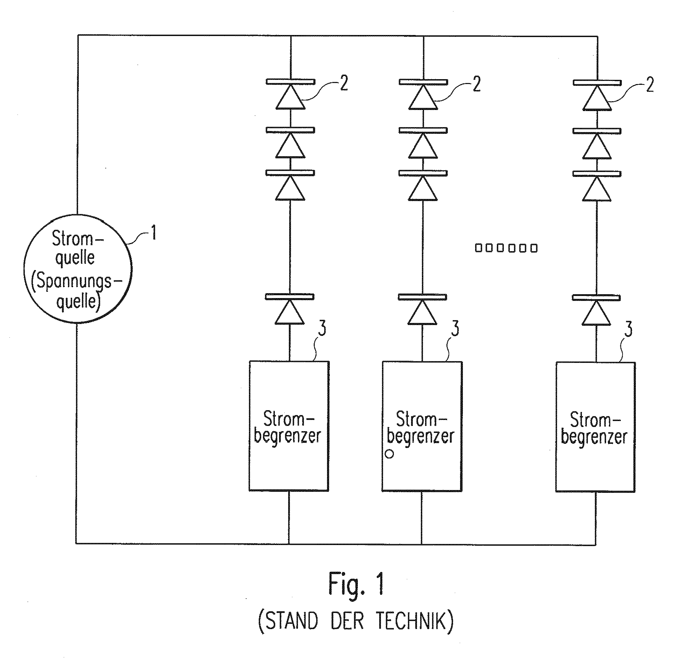

Wie in der Figur 1 gezeigt, ist es deshalb aus dem Stand der Technik bekannt, jedem parallelen LED-Strang 2 in einer Schaltungsanordnung mit gemeinsamer Strom- oder Spannungsquelle 1 je einen Strombegrenzer 3 in Serie zu schalten. Jeder Strombegrenzer 3 ist dazu gedacht, den Anstieg des Stroms innerhalb des jeweiligen LED-Strangs über einen bestimmten Wert hinaus zu begrenzen. Die Strombegrenzer 3 verhindern typischerweise relativ zuverlässig den Anstieg des Stroms in einem LED-Strang bei einem dort auftretenden Kurzschluss.

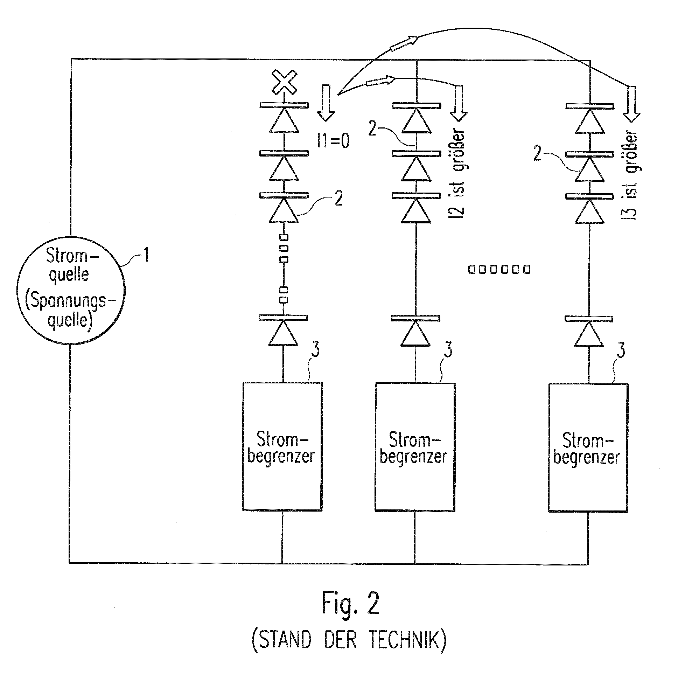

Die Strombegrenzer 3 in der bekannten Schaltungsanordnung funktionieren aber nur sehr begrenzt im Falle einer Unterbrechung in einem der parallelen LED-Stränge 2, wie es in Fig. 2 gezeigt ist. Insbesondere können die Strombegrenzer 3 in einen Fall, bei dem sowohl ein Kurzschluss als auch eine Unterbrechung in wenigstens zwei verschiedenen parallelen LED-Strängen auftreten, äußerst schlecht einen Stromanstieg kompensieren.

Deshalb besteht wie in Fig. 2 gezeigt die Gefahr in einer bekannten Schaltungsanordnung, dass es bei einer Unterbrechung in einem LED-Strang 2 aufgrund eines Defekts, zu einer Umverteilung des von der Strom- bzw. Spannungsquelle zur Verfügung gestellten Stroms auf die anderen LED-Stränge 2 kommt. Dies kann zur Folge haben, dass in diesen LED-Strängen der Strom I2, I3 in einen nicht-gewünschten stark erhöhten Bereich ansteigt, insbesondere wenn die LED-Stränge 2 bereits an ihrer Stromobergrenze betrieben werden. Solch ein plötzlicher Stromanstieg kann sogar eine Kettenreaktion auslösen, die dazu führt, dass nach-undnach auch andere LED-Stränge 2 durch den erhöhten Strom beschädigt werden.

Die vorliegende Erfindung hat zur Aufgabe, den bekannten Stand der Technik zu verbessern. Insbesondere ist es eine Aufgabe der vorliegenden Erfindung, das oben genannte Problem einer Kettenreaktion in einer Schaltungsanordnung zu vermeiden. Insbesondere ist es Aufgabe der Erfindung zu verhindern, dass es, wenn eine Unterbrechung in einem LED-Strang auftritt, zu einem ungewünschten Stromanstieg in den anderen LED-Strängen kommt. Die vorliegende Erfindung hat also allgemein zur Aufgabe, einen geeigneten Schutzmechanismus für LEDs in einer Schaltungsanordnung bereitzustellen, der gegen verschiedenste Defekte, insbesondere Unterbrechungen in einem LED-Strang oder Kombinationen aus Kurzschlüssen und Unterbrechungen in verschiedenen LED-Strängen schützt.

Der grundsätzliche Erfindungsgedanke besteht darin, dass parallel zu wenigstens einem LED-Strang einer Schaltungsanordnung, vorzugsweise sogar zu mehreren oder allen parallelen LED-Strängen der Schaltungsanordnung, ein zusätzlicher Strompfad geschaltet ist, der im Fall einer Unterbrechung des LED-Strangs zumindest einen Teil des Stroms durch den LED-Strang aufnehmen kann.

Die vorliegende Erfindung betrifft insbesondere eine Schaltungsanordnung zum Schutz von LEDs, die aufweist, eine Strom- oder Spannungsquelle, mehrere parallel geschaltete LED-Stränge, die von der Strom- oder Spannungsquelle versorgt werden, einen Strombegrenzer innerhalb von jedem LED-Strang, wobei wenigstens einem LED-Strang eine Schutzschaltung zugschaltet ist, die dazu ausgelegt ist, im Falle einer Unterbrechung des LED-Strangs wenigstens einen Teil des für den LED-Strang vorgesehenen Stroms über einen dem LED-Strang parallelen Überbrückungspfad aufzunehmen.

Bei einer Unterbrechung in dem LED-Strang wird durch die Schutzschaltung zumindest verhindert, dass der gesamte für den LED-Strang vorgesehene Strom auf die anderen LED-Stränge verteilt wird. Dadurch werden auch Folgedefekte, wie eine oben beschriebene Kettenreaktion, in den anderen LED-Strängen vermieden, insbesondere dann wenn die anderen LED-Stränge bereits an ihrem Stromlimit betrieben werden. Der Strom durch die anderen LED-Stränge ändert sich dank der Schutzschaltung also zumindest nur wenig, gegebenenfalls gar nicht. Die LEDs in einem LED-Strang sind in der vorliegenden Schaltungsanordnung sowohl gegen einen eigenen Kurzschluss, nämlich durch ihren Strombegrenzer, als auch gegen Unterbrechungsfehler in anderen LED-Strängen, nämlich durch die Schutzschaltungen der anderen LED-Stränge, geschützt.

Vorzugsweise ist mehreren, noch mehr bevorzugt allen LED-Strängen eine Schutzschaltung zugeschaltet.

Dadurch können alle LEDs der Schaltungsanordnung umfassend gegen Kurzschlüsse und Unterbrechungen geschützt werden. Insbesondere schützt die Kombination aus mehreren Schutzschaltungen und Strombegrenzern die LEDs in den parallelen LED-Strängen der Schaltungsanordnung vor beliebigen Defekten, insbesondere auch vor Unterbrechungen in mehreren parallelen Zweigen gleichzeitig, oder sogar Kombinationen von Unterbrechungen und Kurzschlüssen in verschiedenen LED-Strängen.

Vorzugsweise ist die wenigstens eine Schutzschaltung dazu ausgelegt, wenigstens 50% des für den LED-Strang vorgesehenen Stroms über den Überbrückungspfad aufzunehmen.

Dadurch wird höchstens 50% des für diesen LED-Strang vorgesehenen Stroms auf die anderen LED-Stränge verteilt. Vorzugsweise wird dieser Strom gleichmäßig auf die noch intakten anderen LED-Stränge aufgeteilt. Die Schutzschaltung kann in diesem Fall klein und preiswert hergestellt werden. Es kann natürlich auch vorgesehen sein, dass die Schutzschaltung den gesamten für den LED-Strang vorgesehenen Strom aufnimmt, so dass gar kein Stromanstieg in den parallelen intakten LED-Strängen verursacht wird. Der Anteil des von der Schutzschaltung aufgenommenen Stroms wird vorzugsweise bei der Auslegung der Schaltungsanordnung festgelegt.

Vorzugsweise ist die wenigstens eine Schutzschaltung dazu ausgelegt ist, den Strombegrenzer in dem LED-Strang zum Erfassen einer Unterbrechung des LED-Strangs auszunutzen.

Der Strombegrenzer wird also als Sensor die Erfassung der Unterbrechung in dem LED-Strang genutzt. Dazu kann die Schutzschaltung beispielweise einen Erfassungsabschnitt aufweisen. Der Überbrückungspfad der Schutzschaltung kann entsprechend von dem Erfassungsabschnitt gesteuert werden. Beispielweise wird der Überbrückungspfad bei Erfassung einer Unterbrechung in dem LED-Strang geöffnet. Es sind auch Fälle denkbar, in denen unvollständige Unterbrechungen auftreten, d.h. beispielweise Defekte, die nur noch einen Teil des vorgesehenen Stroms durch den LED-Strang fließen lassen. Der Strom durch den LED-Strang erniedrigt sich also, sinkt aber nicht gänzlich auf null ab. In diesem Fall kann der Erfassungsabschnitt den Überbrückungspfad beispielweise nur teilweise öffnen, d.h. eine Stromerhöhung in dem Überbrückungspfad kann abhängig von, beispielweise proportional zu, der Stromerniedrigung im LED-Strang sein.

Vorzugsweise weist die wenigstens eine Schutzschaltung auf, einen ersten Transistor, dessen Steueranschluss mit dem Ausgang des zugeordneten LED-Strangs verbunden ist, einen zweiten Transistor, der wenigstens ein Teil des Überbrückungspfads ist und dessen Steueranschluss mit einem Hauptanschluss des ersten Transistors verbunden ist, wobei die Schutzschaltung derart ausgelegt ist, dass im Falle einer Unterbrechung des LED-Strangs der erste Transistor sperrt, wodurch sich ein Stromfluss durch den zweiten Transistor erhöht, so dass der Teil des für den LED-Strang vorgesehenen Stroms über den Überbrückungspfad aufgenommen wird.

Der erste Transistor wirkt also als Erfassungsabschnitt der Schutzschaltung und steuert abhängig von der Stromerniedrigung in dem LED-Strang den zweiten Transistor und somit den Stromfluss durch den Überbrückungspfad. Ein Steueranschluss kann beispielweise ein Gate-Anschluss eines Feldeffekt-Transistors sein, oder kann ein Basis-Anschluss eines Bipolar-Transistors sein. Ein Hauptanschluss kann beispielweise ein Source-Anschluss oder ein Drain-Anschluss eines Feldeffekt-Transistors sein, oder kann ein Emitter-Anschluss oder ein Kollektor-Anschluss eines Bipolar-Transistors sein.

Vorzugsweise ist der Steueranschluss des ersten Transistors über wenigstens einen Widerstand mit einem Eingang des Strombegrenzers des zugeordneten LED-Strangs verbunden.

Vorzugsweise besteht der Überbrückungspfad aus dem zweiten Transistor und wenigstens einem dazu seriell geschalteten Widerstand.

Vorzugsweise ist dem Überbrückungspfad der wenigstens einen Schutzschaltung wenigstens ein zusätzlicher Transistor vorgeschaltet.

Vorzugsweise sind sogar mehrere zusätzliche Transistoren vorgeschaltet. Jeder Transistor bewirkt einen Spannungsabfall. Dies wiederum bedeutet, dass die Schutzschaltung weniger Leistung aufnehmen muss. Dadurch kann die Schutzschaltung beispielweise mit kleineren und preiswerteren Komponenten hergestellt werden. Außerdem ist die gesamte Schaltungsanordnung stromsparender.

Vorzugsweise ist in dem Überbrückungspfad der wenigstens einen Schutzschaltung eine Zusatzschaltung angeordnet, die dazu ausgelegt ist, im Falle einer Unterbrechung des LED-Strangs aktiviert zu werden und daraufhin eine Fehlermeldung auszugeben. Die Schaltungsanordnung ist also nicht nur in der Lage, Unterbrechungen in den LED-Strängen zu kompensieren, sondern das Auftreten solcher Unterbrechungen beispielweise über eine entsprechende Nachricht etwa an eine Zentrale zu übermitteln. Die Überwachung der LED-Stränge bzw. der gesamten Schaltungsanordnung, die eine große Anzahl an parallelen LED-Strängen aufweisen kann, wird dadurch wesentlich vereinfacht.

Vorzugsweise ist die Zusatzschaltung dazu ausgelegt, die Fehlermeldung über Funk zu übermitteln.

Die vorliegende Erfindung betrifft ferner eine Schutzschaltung für LEDs, die dazu ausgelegt ist, derart einem LED-Strang zugeschaltet zu werden, dass sie im Falle einer Unterbrechung des LED-Strangs wenigstens einen Teil des für den LED-Strang vorgesehenen Stroms über einen dem LED-Strang parallelen Überbrückungspfad aufnimmt.

Mit der Schutzschaltung kann eine bekannte Schaltungsanordnung, wie beispielweise in Fig. 1 gezeigt, nachgerüstet werden. Die erfindungsgemäße Schutzschaltung hat den großen Vorteil, dass sie parallel zu einem LED-Strang geschaltet werden kann. Dies ermöglicht es, das Layout der Schutzschaltung sehr einfach zu halten. Die Schutzschaltung kann entsprechend dem LED-Strang bzw. entsprechend einer Schaltungsordnung mit mehreren parallelen LED-Strängen angepasst werden. Beispielweise kann eingestellt werden, wie viel des für einen LED-Strang vorgesehenen Stroms von der Schutzschaltung aufgenommen wird, falls es zu einer totalen Unterbrechung des LED-Strangs kommt.

Vorzugsweise weist die Schutzschaltung einen mit dem Überbrückungspfad verbundenen Erfassungsabschnitt auf, der dazu ausgelegt ist, eine Unterbrechung des zugeordneten LED-Strangs zu erfassen und daraufhin einen Stromfluss durch den Überbrückungspfad zu erhöhen.

Da der Strombegrenzer empfindlich auf Änderungen des Stroms durch den LED-Strang reagiert, ist er als Sensor für die Erfassung von Unterbrechungen vorteilhaft. Die Schutzschaltung ist vorzugsweise so ausgelegt, dass wenn eine Stromerniedrigung in dem LED-Strang erfasst wird, eine automatische Kompensation d.h. eine automatische Umverteilung des Stroms bzw. eines Teils des Stroms über den Überbrückungspfad, stattfindet.

Vorzugsweise weist die Schutzschaltung auf, einen ersten Transistor, der wenigstens ein Teil des Erfassungsabschnitts ist und dessen Steueranschluss mit dem Ausgang des LED-Strangs zu verbinden ist, einen zweiten Transistor, der wenigstens einen Teil des Überbrückungspfads ist und dessen Steueranschluss mit einem Hauptanschluss des ersten Transistors verbunden ist, wobei die Schutzschaltung derart ausgelegt ist, dass im Falle einer Unterbrechung des LED-Strangs der erste Transistor sperrt, wodurch sich ein Stromfluss durch den zweiten Transistor erhöht, so dass der Teil des für den LED-Strang vorgesehenen Stroms über den Überbrückungspfad aufgenommen wird.

Vorzugsweise ist der Steueranschluss des ersten Transistors über wenigstens einen Widerstand mit einem Eingang eines Strombegrenzers des LED-Strangs zu verbinden.

Vorzugsweise besteht der Überbrückungspfad aus dem zweiten Transistor und wenigstens einem dazu seriell geschalteten Widerstand.

Die vorliegende Erfindung wird nun mit Bezug auf die beigefügten Figuren im Detail beschrieben.
Figur 1 zeigt eine aus dem Stand der Technik bekannte Schaltungsanordnung.
Figur 2 zeigt die aus dem Stand der Technik bekannte Schaltungsanordnung, bei der eine Unterbrechung in einem LED-Strang aufgetreten ist.
Figur 3 zeigt eine Schaltungsanordnung einer ersten Ausführungsform der vorliegenden Erfindung.
Figur 4 zeigt die erfindungsgemäße Schaltungsanordnung, bei der eine Unterbrechung in einem LED-Strang aufgetreten ist.
Figur 5 zeigt die erfindungsgemäße Schaltungsanordnung, bei der eine Unterbrechung in einem LED-Strang aufgetreten ist.
Figur 6 zeigt eine Schaltungsanordnung einer zweiten Ausführungsform der vorliegenden Erfindung.
Figur 7 zeigt eine Schaltungsanordnung einer dritten Ausführungsform der vorliegenden Erfindung.
Figur 8 zeigt ein Beispiel für eine Schaltungsanordnung der ersten Ausführungsform der vorliegenden Erfindung.
Figur 9 zeigt ein Beispiel für eine Schaltungsanordnung der ersten Ausführungsform der vorliegenden Erfindung.
Figur 10 zeigt ein Beispiel für eine Schaltungsanordnung der ersten Ausführungsform der vorliegenden Erfindung.

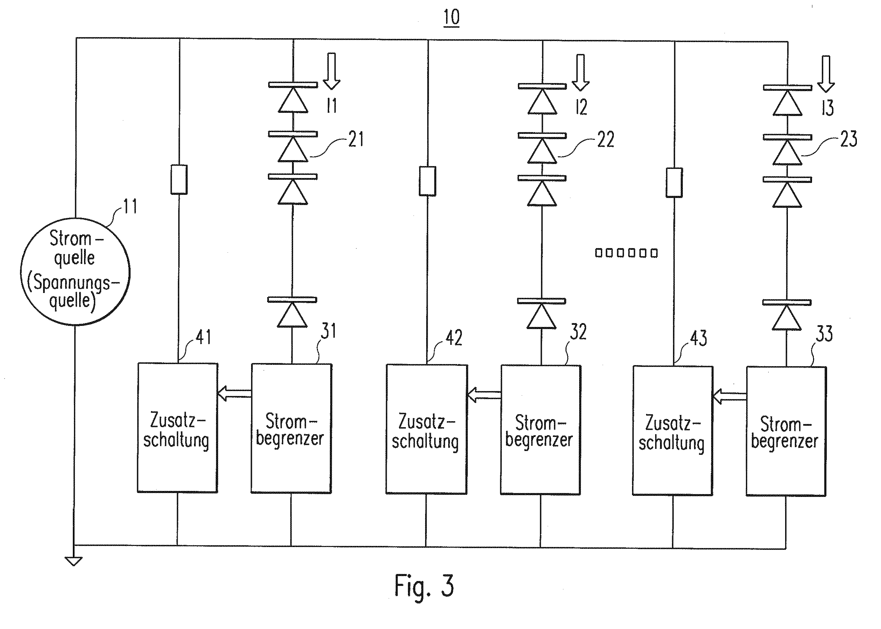

Figur 3 zeigt eine Schaltungsanordnung 10 der vorliegenden Erfindung, die zum Schutz von LEDs ausgelegt ist. Die Schaltungsanordnung 10 weist eine Strom- oder Spannungsquelle 11 auf, welche mehrere parallel geschaltete LED-Stränge 21, 22, 23 mit Strom bzw. Spannung versorgt. Beispielweise kann die Strom- oder Spannungsquelle 11 die parallel geschalteten LED-Stränge 21, 22, 23 gemeinsam mit einem Konstantstrom oder einer Konstantspannung versorgen.

Die mehreren LED-Stränge 21, 22, 23 weisen jeweils mehrere in Serie geschaltete Leuchtmittel auf. Bevorzugt sind die Leuchtmittel LEDs. Anstelle von LEDs können aber auch andere in Serie geschaltete Leuchtmittel, bspw. OLEDs, mehrere LED-Gruppen oder herkömmliche Leuchtmittel vorgesehen sein. Beispielweise kann jeder LED-Strang eine rote, eine grüne und eine blaue LED zum insgesamt Erzeugen von Weißlicht aufweisen. Jedes Leuchtmittel in einem LED-Strang kann aber auch selbst ein weiß leuchtendes Leuchtmittel sein. Beispielweise kann jedes Leuchtmittel eine weiß leuchtende LED-Gruppe sein, die aus verschieden farbigen LEDs gebildet wird. Jedes Leuchtmittel kann auch aus einer LED, beispielweise einer blau leuchtenden LED, und einem geeigneten Farbkonversionsstoff, beispielweise einem durch blaues Licht anregbaren und gelb leuchtenden Stoff, gebildet sein, um insgesamt weißes Licht abzugeben.

Durch jeden LED-Strang 21, 22, 23 fließt ein Strom I1, I2, I3. In der Figur 3 sind drei der mehreren parallelen LED-Stränge gezeigt. Durch den LED-Strang 21 fließt ein Strom I1, durch den LED-Strang 22 fließt ein Strom I2 und durch den LED-Strang 23 fließt ein Strom I3. Der Strom I1, I2, I3 durch einen LED-Strang 21, 22, 23 ist abhängig von dem effektiven Widerstand des gesamten LED-Strangs 21, 22, 23.

Um den Strom I1, I2, I3 durch jeden LED-Strang 21, 22, 23 im Falle eines Kurzschlusses zu begrenzen, ist in jedem LED-Strang 21, 22, 23 ein Strombegrenzer 31, 32, 33 angeordnet. Der Strombegrenzer 31, 32, 33 kann ein aus dem Stand der Technik bekannter Strombegrenzer 3 sein, der insbesondere dazu ausgelegt ist, bei einem Kurzschluss in dem entsprechenden LED-Strang 21, 22, 23 zu verhindern, dass der Strom über einen bestimmten Schwellenwert hinaus ansteigt.

Wenigstens einem LED-Strang 21, 22, 23, vorzugsweise sogar mehreren LED-Strängen 21, 22, 23, oder noch mehr bevorzugt allen LED-Strängen 21, 22, 23 ist eine Schutzschaltung 41, 42, 43 zugeschaltet. Die Schutzschaltung 41, 42, 43 weist einen Überbrückungspfad auf, welcher dem entsprechenden LED-Strang 21, 22, 23, welchem die Schutzschaltung 41, 42, 43 zugeschaltet ist, parallel geschaltet ist. Die Schutzschaltung 41, 42, 43 kann beispielweise nur aus dem Überbrückungspfad bestehen. Die Schutzschaltung 41, 42, 43 kann aber auch aus einem Überbrückungspfad und einem Erfassungsabschnitt bestehen, wie später im Detail beschrieben wird. Der Erfassungsabschnitt der Schutzschaltung 41, 42, 43 ist dabei vorzugsweise derart ausgelegt, dass er den Strombegrenzer 31, 32, 33 des entsprechenden LED-Strangs 21, 22, 23 ausnutzen kann, um eine Unterbrechung in dem LED-Strang 21, 22, 23 festzustellen. Daraufhin kann der Erfassungsabschnitt den Überbrückungspfad steuern, d.h. leitfähig machen, um den LED-Strang zu überbrücken.

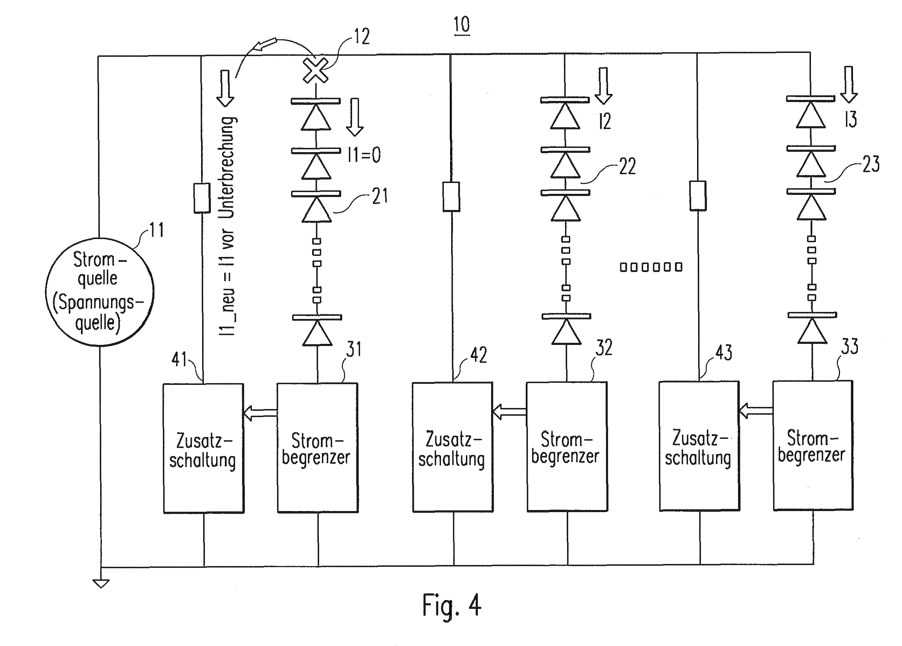

In Figur 4 ist ein Fall gezeigt, in dem in einem ersten LED-Strang 21 eine Unterbrechung 12 auftritt. Dadurch sinkt der Strom I1, der durch den LED-Strang 21 fließt, beispielweise auf 0 ab. Der durch den LED-Strang 21 nicht mehr fließende Strom I1 muss nun umverteilt werden. Beim bekannten Stand der Technik würde sich nun der Strom I1 auf die Ströme I2 bzw. I3 durch die LED-Stränge 22 bzw.23 beaufschlagen, wie es in Fig. 2 gezeigt ist. Der Strom 12,13 durch die gezeigten weiteren LED-Stränge 22 und 23 würde sich also erhöhen. Bei der vorliegenden Erfindung fließt nun zumindest ein Teil des Stroms I1, der für den LED-Strang 21 vorgesehen war, über den Überbrückungspfad der Schutzschaltung 41. In Figur 4 ist ein Fall gezeigt, bei dem der komplette Strom I1, der eigentlich für den LED-Strang 21 vorgesehen war, nun durch die Schutzschaltung 41 fließt. Dadurch wird ein Stromanstieg in den LED-Strängen 22, 23 gänzlich verhindert.

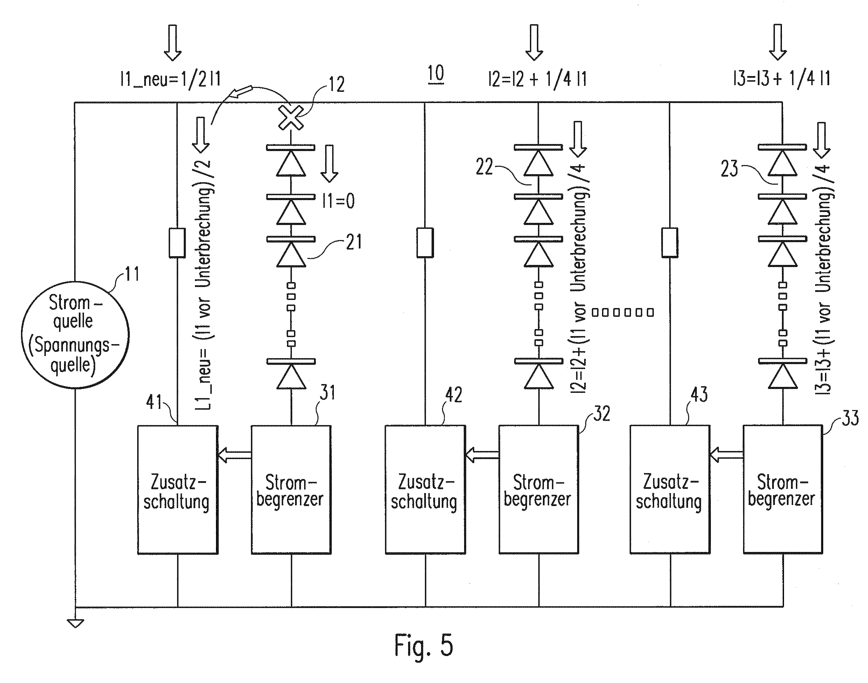

Alternativ kann aber auch, wie beispielweise in Fig. 5 gezeigt, nur vorgesehen sein, dass wenigstens 50% oder genau 50% des für den LED-Strang 21 vorgesehenen Strom I1 über den Überbrückungspfad der Schutzschaltung 41 fließen, wenn eine Unterbrechung 12 in dem LED-Strang 21 auftritt. Der Strom I1, der nun durch die Schutzschaltung 41 fließt, ist also halb so groß wie der Strom I1, der vor der Unterbrechung durch den LED-Strang 21 geflossen ist. Der übrige Strom wird beispielweise zu gleichen Teilen auf die anderen LED-Stränge 22, 23 verteilt. Es ist auch möglich, den Teil des Stroms, der durch die Schutzschaltung 41 bei einer Unterbrechung 12 in dem LED-Strang 21 fließt, beliebig einzustellen. Beispielweise könnten auch nur zwischen 10% und 40% des Stroms I1 durch die Schutzschaltung 41 geleitet werden, während die restlichen 60% bis 90% auf die übrigen intakten LED-Stränge 22, 23 verteilt werden. Vorzugsweise werden aber mindestens 50%, noch mehr bevorzugt mindestens 70% des Stroms I1 bei einem Ausfall des LED-Strangs 21 auf den Überbrückungspfad der Schutzschaltung 41 verteilt.

Vorzugsweise ist in der erfindungsgemäßen Schaltungsanordnung 10 jedem der LED-Stränge 21, 22, 23 eine Schutzschaltung 41, 42, 43 zugeschaltet. Vorzugsweise sind alle Schutzschaltungen 41, 42, 43 gleichermaßen gestaltet. Es ist aber auch möglich, jede Schutzschaltung 41, 42, 43 individuell zu gestalten, so dass beispielweise bei einer Unterbrechung 12 in dem LED-Strangs 21 wenigstens 50% des Strom I1 durch die Schutzschaltung 41 fließen, aber etwa bei einer Unterbrechung in dem LED-Strang 22 der komplette Strom I2 durch die Schutzschaltung 42 fließt.

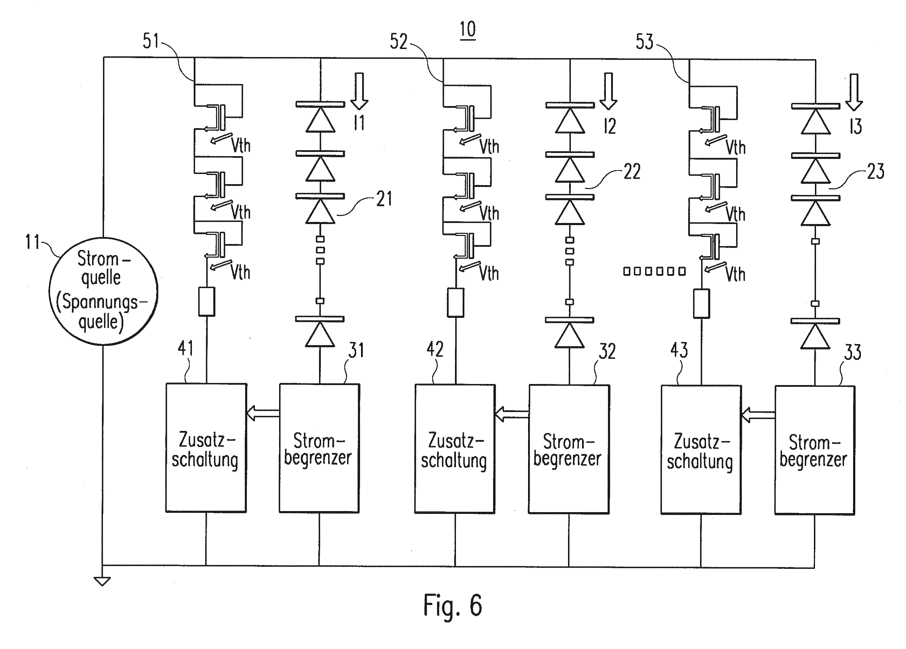

In Fig. 6 ist eine weitere Ausführungsform der Schaltungsanordnung 10 gezeigt. Diese ist wie die Schaltungsanordnung 10 aus der Fig. 3 aufgebaut, nur dass jeder Schutzschaltung 41, 42, 43 bzw. jedem Überbrückungspfad parallel zu den entsprechenden LED-Strängen 21, 22, 23 noch wenigstens ein Transistor 51, 52, 53, vorzugsweise sogar mehrere Transistoren 51, 52, 53 in Serie geschaltet sind. Die zusätzlichen Transistoren 51, 52, 53 bewirken, dass für den Fall einer Unterbrechung 12 in einem LED-Strang 21, 22, 23, bei der der Strom I1, I2, I3 durch die entsprechende zugeschaltete Schutzschaltung 41, 42, 43 geleitet wird, über die zusätzlichen Transistoren 51, 52, 53 eine bestimmte Spannung abfällt. Dieser Spannungsabfall bewirkt wiederum, dass die entsprechende Schutzschaltung 41, 42, 43 weniger Leistung aufnehmen muss und die Schaltungsanordnung 10 stromsparender arbeitet.

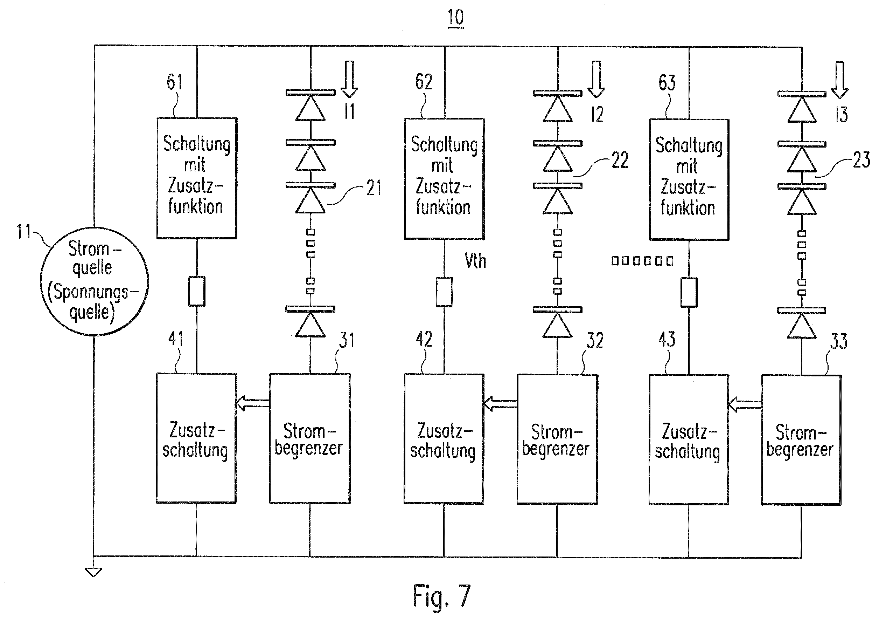

In einer weiteren Ausführungsform ist in Fig. 7 gezeigt, dass alternativ oder zusätzlich jeder Schutzschaltung 41, 42, 43 auch eine Schaltung mit zusätzlicher Funktionalität, also eine Zusatzschaltung 61, 62, 63, vorgeschaltet sein kann oder in dem Überbrückungspfad der entsprechenden Schutzschaltung 41, 42, 43 angeordnet sein kann. Die Zusatzschaltung 61, 62, 63 wird vorzugsweise nur im Falle einer Unterbrechung 12 des dazu parallelen LED-Strangs 21, 22, 23 aktiv bzw. nur dann mit Energie versorgt. Die Schutzschaltung 61, 62, 63 ist vorzugsweise dazu ausgelegt, eine zusätzliche Funktion zu übernehmen, beispielweise eine Fehlermeldung auszugeben. Vorzugsweise ist die Zusatzschaltung 61, 62, 63 dazu ausgelegt, eine Fehlermeldung über Funk zu übermitteln. Dazu weist sie ein Funkmodul mit einer Antenne auf. Die erfindungsgemäße Schaltungsanordnung 10 der Fig. 6 ist somit in der Lage, nicht nur eine Unterbrechung 12 in einem LED-Strang 21, 22, 23 auszugleichen bzw. zu kompensieren, sondern auch eine entsprechende Nachricht, also eine Fehlermeldung, an beispielweise eine Zentrale, vorzugsweise per Funk zu übermitteln.

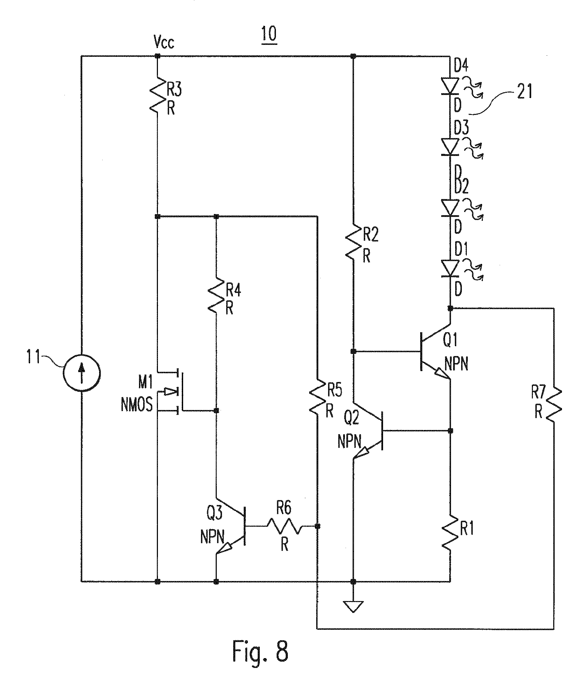

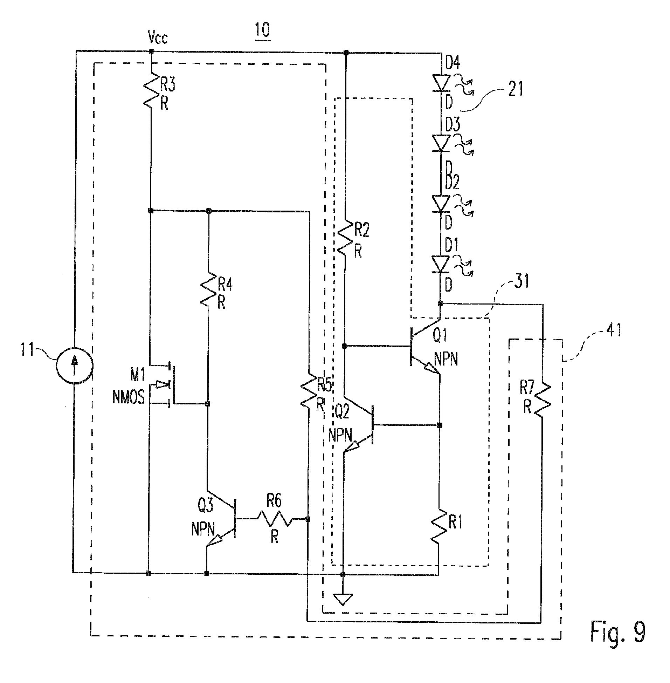

Die Figuren 8 und 9 zeigen ein konkretes Beispiel für einen Schaltkreis der Schaltungsanordnung 10 der vorliegenden Erfindung. In Fig. 8 und 9 sind ein LED-Strang 21 und eine Spannungsquelle 11 gezeigt. Der Strombegrenzer 31 des LED-Strangs 21 besteht aus Transistoren Q1 bzw. Q1 und vorzugsweise Widerständen R1 bzw. R1, die in einer bekannten Weise aktiv sind, um den Stromfluss durch den LED-Strang 21 auf einen bestimmten Wert einzustellen bzw. bei einem Kurzschluss in dem LED-Strang 21 zu beschränken.

In der Figur 9 ist der Strombegrenzer 31 durch eine gepunktete Umrandung hervorgehoben. Die Schutzschaltung 41 des LED-Strangs 2 besteht aus den Transitoren Q3 bzw. M1 sowie vorzugsweise wenigstens den Widerständen R6, R7 und R3. Vorzugsweise sind auch noch Widerstände R4 und R5 wie gezeigt verschaltet. Wiederum ist in Fig. 9, diesmal durch eine gestrichelte Umrandung, die Schutzschaltung 41 hervorgehoben.

Für den Fall, dass nunmehr ein Defekt zu einer Unterbrechung 12 in dem LED-Strang 21 führt, hat dies zur Folge, dass am Ausgang des LED-Strangs 21 bzw. an einem Punkt zwischen dem LED-Strang 21 und dem Strombegrenzer 31, also am Eingang des Strombegrenzers 31, eine erniedrigte Spannung anliegt. Die Spannung erniedrigt sich schlagartig wenn eine Unterbrechung im LED-Strang 21 auftritt. Diese Spannungserniedrigung kann über die Widerstände R7 und R6 auf den Transistor Q3 übertragen werden. Dabei ist der Steueranschluss, beispielweise ein Gate-Anschluss oder ein Basis-Anschluss, des Transistors Q3 über vorzugsweise wenigstens die Widerstände R6 und R7 mit dem Ausgang des LED-Strangs 21 bzw. dem Eingang des Strombegrenzers 31 verschaltet. Die Widerstände R6, R7 und der Transistor Q3 bilden also zusammen einen Erfassungsabschnitt der Schutzschaltung 41.

Durch die erniedrigte Spannung am Ausgang des LED-Strangs 21 sperrt der Transistor Q3 Dies wiederum hat zur Folge, dass über den Transistor M1, der vorzugsweise ein N-MOS Transistor ist, ein höherer Stromfluss erfolgt bzw. erfolgen kann. Insbesondere erfolgt der erhöhte Stromfluss derart, dass der ursprünglich für den LED-Strang 21 vorgesehene Strom nun über den Überbrückungspfad, der wenigstens aus dem Transistor M1 gebildet wird, vorzugsweise eine Serienschaltung des Transistors M1 und des Widerstands R3 ist, geleitet wird. Die Menge des Stroms, der bei einer Unterbrechung 12 des LED-Strangs 21 über den Überbrückungspfad R3 und M1 der Schutzschaltung 41 fließt, kann durch Wahl der Widerstände bzw. der Transistoren der Zusatzschaltung 41 eingestellt werden.

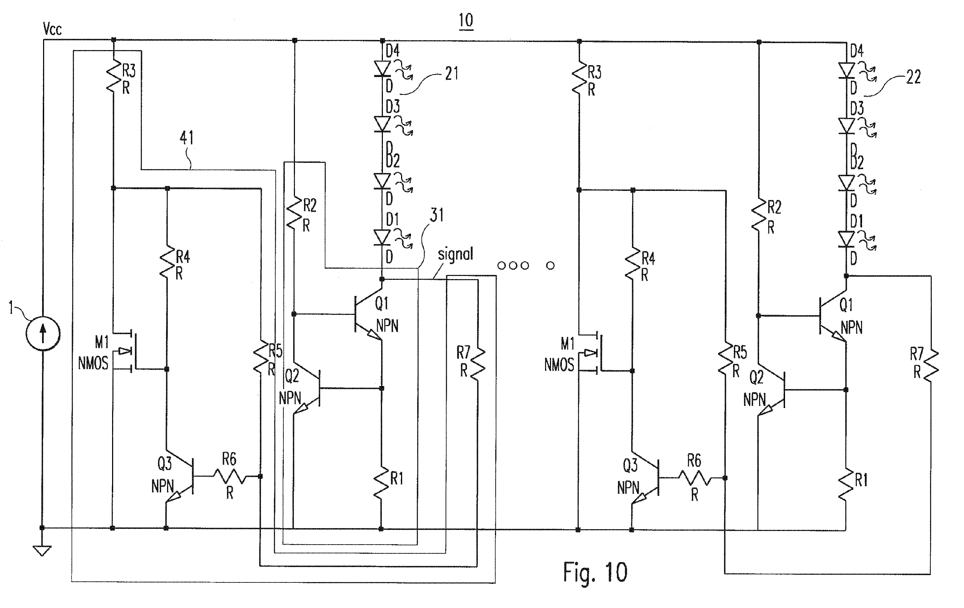

Wie in der Figur 10 zu sehen, ist vorzugsweise mehreren LED-Strängen 21, 22 noch mehr bevorzugt allen LED-Strängen 21, 22 der Schaltungsanordnung 10, eine Schutzschaltung 41, 42, 43, wie in den Fig. 8 und 9 gezeigt, zugeschaltet.

Zusammenfassend ist eine Schutzschaltung 41, 42, 43 der vorliegenden Erfindung dazu ausgelegt, einem LED-Strang 21, 22, 23 zugeschaltet zu werden. Die Schutzschaltung 41, 42, 43 ist ferner dazu geeignet, im Falle einer Unterbrechung 12 des LED-Strangs 21, 22, 23 wenigstens einen Teil des für diesen LED-Strang 21, 22, 23 vorgesehenen Stroms aufzunehmen. Insbesondere wird der Strom über den parallelen Überbrückungspfad der Schutzschaltung 41, 42, 43 geleitet. In einer Schaltungsanordnung 10, welche wenigstens eine erfindungsgemäße Schutzschaltung 41, 42, 43 aufweist, können die LEDs der LED-Stränge 21, 22, 23 dadurch sowohl gegen Kurzschlüsse als auch gegen Unterbrechungen 12 als auch gegen eine Kombination derartiger Fehler geschützt werden. Insbesondere kann die vorliegende Erfindung auch eine Kombination der genannten Fehler, die in verschiedenen parallelen LED-Strängen 21, 22, 23 gleichzeitig auftreten, kompensieren. Die vorliegende Erfindung kann deshalb verhindern, dass bei Auftreten eines Fehlers in einem LED-Strang 21, 22, 23 eine Kettenreaktion über die anderen parallel geschalteten LED-Stränge 21, 22, 24 hinweg auftritt. Der Vorteil der vorliegenden Erfindung ist demnach, dass der Strom durch LED-Stränge 21, 22, 23 in denen kein Fehler auftritt, sich nur marginal im Falle von einem Kurzschluss als auch im Falle einer Unterbrechung 12 in anderen LED-Strängen 21, 22, 23 ändert. Die vorliegende Erfindung hat ferner den Vorteil, dass durch Wahl der Widerstände und Transistoren äußerst einfach eingestellt werden kann, wie viel, d.h. welcher Anteil, des Stroms, der für einen LED-Strang 21, 22, 23 vorgesehen ist, von der entsprechenden Schutzschaltung 41, 42, 43 aufgenommen wird. Schließlich ist die Schutzschaltung 41, 42, 43 der vorliegenden Erfindung dazu ausgelegt, parallel zu einem LED-Strang 21, 22, 23 geschaltet zu werden, was das Layout und die Gestaltung der Schutzschaltung 41, 42, 43 wesentlich vereinfacht.

## Patentansprüche

1. Schaltungsanordnung (10) zum Schutz von LEDs, die aufweist
eine Strom- oder Spannungsquelle (11),
mehrere parallel geschaltete LED-Stränge (21, 22, 23), die von der Strom- oder Spannungsquelle (11) versorgt werden,
einen Strombegrenzer (31, 32, 33) innerhalb von jedem LED-Strang (21, 22, 23),
wobei wenigstens einem LED-Strang (21, 22, 23) eine Schutzschaltung (41, 42, 43) zugschaltet ist, die dazu ausgelegt ist, im Falle einer Unterbrechung (12) des LED-Strangs (21, 22, 23) wenigstens einen Teil des für den LED-Strang (21, 22, 23) vorgesehenen Stroms (I1, I2, I3) über einen dem LED-Strang (21, 22, 23) parallelen Überbrückungspfad (R3, M1) aufzunehmen.

2. Schaltungsanordnung (10) gemäß Anspruch 1, wobei mehreren, vorzugsweise allen, LED-Strängen (21, 22, 23) eine Schutzschaltung (41, 42, 43) zugeschaltet ist.

3. Schaltungsanordnung (10) gemäß Anspruch 1 oder 2, wobei die wenigstens eine Schutzschaltung (41, 42, 43) dazu ausgelegt ist, wenigstens 50% des für den LED-Strang (21, 22, 23) vorgesehenen Stroms (I1, I2, I3) über den Überbrückungspfad (R3, M1) aufzunehmen.

4. Schaltungsanordnung (10) gemäß einem der Ansprüche 1 bis 3, wobei die wenigstens eine Schutzschaltung (41, 42, 43) dazu ausgelegt ist, den Strombegrenzer (31, 32, 33) in dem LED-Strang (21, 22, 23) zum Erfassen einer Unterbrechung (12) des LED-Strangs (21, 22, 23) auszunutzen.

5. Schaltungsanordnung (10) gemäß einem der Ansprüche 1 bis 4, wobei die wenigstens eine Schutzschaltung (41, 42, 43) aufweist,
einen ersten Transistor (Q3), dessen Steueranschluss mit dem Ausgang des zugeordneten LED-Strangs (21, 22, 23) verbunden ist,
einen zweiten Transistor (M1), der wenigstens ein Teil des Überbrückungspfads (R3, M1) ist und dessen Steueranschluss mit einem Hauptanschluss des ersten Transistors (Q3) verbunden ist,
wobei die Schutzschaltung (41, 42, 43) derart ausgelegt ist, dass im Falle einer Unterbrechung (12) des LED-Strangs (21, 22, 23) der erste Transistor (Q3) sperrt, wodurch sich ein Stromfluss durch den zweiten Transistor (M1) erhöht, so dass der Teil des für den LED-Strang (21, 22, 23) vorgesehenen Stroms (I1, I2, I3) über den Überbrückungspfad (R3, M1) aufgenommen wird.

6. Schaltungsanordnung (10) gemäß Anspruch 5, wobei der Steueranschluss des ersten Transistors (Q3) über wenigstens einen Widerstand (R6, R7) mit einem Eingang des Strombegrenzers (41, 42, 43) des zugeordneten LED-Strangs (21, 22, 23) verbunden ist.

7. Schaltungsanordnung (10) gemäß Anspruch 5 oder 6, wobei der Überbrückungspfad (R1, M1) aus dem zweiten Transistor (M1) und wenigstens einem dazu seriell geschalteten Widerstand (R3) besteht.

8. Schaltungsanordnung (10) gemäß einem der Ansprüche 1 bis 7, wobei dem Überbrückungspfad (R1, M1) der wenigstens einen Schutzschaltung (41, 42, 43) wenigstens ein zusätzlicher Transistor (51, 52, 53) vorgeschaltet ist.

9. Schaltungsanordnung (10) gemäß einem der Ansprüche 1 bis 8, wobei in dem Überbrückungspfad (R1, M1) der wenigstens einen Schutzschaltung (41, 42, 43) eine Zusatzschaltung (61, 62, 63) angeordnet ist, die dazu ausgelegt ist, im Falle einer Unterbrechung des LED-Strangs (21, 22, 23) aktiviert zu werden und daraufhin eine Fehlermeldung auszugeben.

10. Schaltungsanordnung gemäß Anspruch 9, wobei die Zusatzschaltung (61, 62, 63) dazu ausgelegt ist, die Fehlermeldung über Funk zu übermitteln.

11. Schutzschaltung (41, 42, 43) für LEDs, die dazu ausgelegt, derart einem LED-Strang (21, 22, 23) zugeschaltet zu werden, dass sie im Falle einer Unterbrechung (12) des LED-Strangs (21, 22, 23) wenigstens einen Teil des für den LED-Strang (21, 22, 23) vorgesehenen Stroms über einen dem LED-Strang (21, 22, 23) parallelen Überbrückungspfad (R3, M1) aufnimmt.

12. Schutzschaltung gemäß Anspruch 11, die einen mit dem Überbrückungspfad (R3, M1) verbundenen Erfassungsabschnitt (R6, R7, Q3) aufweist, der dazu ausgelegt ist, eine Unterbrechung (12) des zugeordneten LED-Strangs (21, 22, 23) zu erfassen und daraufhin einen Stromfluss durch den Überbrückungspfad (R3, M1) zu erhöhen.

13. Schutzschaltung (41, 42, 43) gemäß Anspruch 12, die aufweist,
einen ersten Transistor (Q3), der wenigstens ein Teil des Erfassungsabschnitts (R6, R7, Q3) ist und dessen Steueranschluss mit dem Ausgang des LED-Strangs (21, 22, 23) zu verbinden ist,
einen zweiten Transistor (M1), der wenigstens einen Teil des Überbrückungspfads (R3, M1) ist und dessen Steueranschluss mit einem Hauptanschluss des ersten Transistors (Q3) verbunden ist,
wobei die Schutzschaltung (41, 42, 43) derart ausgelegt ist, dass im Falle einer Unterbrechung (!2) des LED-Strangs (21, 22, 23) der erste Transistor (Q3) sperrt, wodurch sich ein Stromfluss durch den zweiten Transistor (M1) erhöht, so dass der Teil des für den LED-Strang (21, 22, 23) vorgesehenen Stroms (I1, I2, I3) über den Überbrückungspfad (R3, M1) aufgenommen wird.

14. Schutzschaltung (41, 42, 43) gemäß Anspruch 13, wobei der Steueranschluss des ersten Transistors (Q3) über wenigstens einen Widerstand (R6, R7) mit einem Eingang eines Strombegrenzers (41, 42, 43) des LED-Strangs (21, 22, 23) zu verbinden ist.

15. Schutzschaltung (41, 42, 43) gemäß Anspruch 13 oder 14, wobei der Überbrückungspfad (R1, M1) aus dem zweiten Transistor (M1) und wenigstens einem dazu seriell geschalteten Widerstand (R3) besteht.
